# EUROPEAN PATENT APPLICATION

(11) **EP 4 548 997 A1**
(43) Date of publication of application: **07.05.2025**
(21) Application number: 23206621.7
(22) Date of filing: 30.10.2023
(51) Int. Cl.: B01D 53/02, B01J 20/00, B01D 53/04, B01D 53/047

(54) **METHOD FOR SEPARATING AND REVERSIBLE STORING CHLORINE GAS FROM CHLORINE CONTAINING GAS AND A STORAGE MEDIUM FOR STORING CHLORINE GAS USED IN SAID METHOD**

(71) Applicant: Freie Universität Berlin, 14195 Berlin (DE)
(72) Inventor: HASENSTAB-RIEDEL, Sebastian, 14532 Kleinmachnow (DE); KLEOFF, Merlin, 14165 Berlin (DE); VOßNACKER, Patrick, 14165 Berlin (DE); LORENZ, Fabio, 12349 Berlin (DE); HAAG, Rainer, 12209 Berlin (DE); WAGNER, Olaf, 12163 Berlin (DE); LORENTE, Alejandro, 12045 Berlin (DE); JUNGE, Florian, 14532 Kleinmachnow (DE); ZOISTER, Christian, 14532 Kleinmachnow (DE)
(74) Representative: Maikowski & Ninnemann Patentanwälte Partnerschaft mbB

(57) **Abstract**

The present invention relates to a method for separating and storing (loading) chlorine Cl₂ from Cl₂ containing gas, in particular Cl₂ containing process gas, by contacting the Cl₂ containing gas with at least one polymeric compound of general formulae (I) comprising a polymer with at least one alkylated cationic quaternary amino moiety and at least one chloride anion per alkylated quaternary amino moiety [Polymer-(NR¹ₐR²_{b}R³_{c})] [CI] (I) wherein R¹, R², R³ being independent from each other a C1-C4 alkyl moiety, preferably selected from the group of methyl, ethyl, n-propyl, iso-propyl, n-butyl, iso-butyl and sec-butyl, wherein the moieties R¹, R², R³ can be the same or differ from each of the other, wherein a, b, c are independently from each other 0, 1, 2 or 3, wherein the sum of a+b+c has to be 3, wherein the chlorine Cl₂ from Cl₂ containing gas is bound by the at least one polymeric compound of general formulae (I) thereby providing a polymeric compound of general formulae (II) [Polymer-NR¹ₐR²_{b}R³_{c}][Cl-(Cl₂)ₙ] (II) wherein n> 0, preferably n >=1, preferably n being 1-4.

## Description

The invention relates to a method for separating and storing chlorine gas from chlorine containing gas, a storage medium for storing chlorine gas used in said method, a method for releasing chlorine gas from said storage medium, the use of said storage medium for separating of chlorine gas from process gas and/or for reversible absorption and storage of chlorine gas, and the use of said storage medium as chlorination agent of alkenes.

### Description

Chlorine is one of the most important basic chemicals in the chemical industry and is needed to produce about 50% of all industrial chemicals, 30% of all agrochemicals and 20% of all pharmaceuticals. Among the most important products of the chlorine industry are polymers such as polyvinyl chloride (PVC) or polyurethanes (PU), but also materials such as phosphorus trichloride, which is of central importance for the synthesis of pesticides and flame retardants.

To meet global chlorine demand in 2021, about 92 million tons of chlorine were produced primarily by chlor-alkali electrolysis, in which sodium chloride is electrolyzed to chlorine gas and sodium hydroxide.

Since the extraction of chlorine is one of the most energy-intensive processes in the chemical industry, with energy requirements accounting for about 50% of production costs,³ chlorine production in Germany alone requires about 12 million MWh, which corresponds to about 2.0% of the electrical energy in Germany. Current projections show that global chlorine production will increase in the next few years to about 119 million tons in 2028, and with it the global electricity demand of the chlorine production.

About half of the chlorine gas produced in chlor-alkali electrolysis is converted on site, and the other half of the chlorine gas is liquefied to make it suitable for transport. However, it is not possible to completely liquefy the chlorine gas with the usual industrial processes. A residual gas stream remains, which consists of about 20% chlorine, 70% air and 10% hydrogen and water vapor. This part of the chlorine, which cannot be liquefied, must be destroyed by adding sodium hydroxide; thus both the chlorine of the residual gas stream and the sodium hydroxide used for it are lost to industry.

If, on the other hand, it is possible to separate further chlorine from the residual gas flow and make it usable, the productivity of the chlor-alkali electrolysis could be increased and consequently the electricity demand of the chlorine production could be reduced.

An established process for separating chlorine from the residual gas stream of chlor-alkali electrolysis is to pass the residual gas stream through tetrachloromethane (CCl₄). Because of the high solubility of chlorine in tetrachloromethane of -0.18 kg Cl₂/kg CCl₄ at 0°C (N. W. Taylor, J. H. Hildebrand, J. Am. Chem. Soc. 1923, 45, 682-694), the chlorine content of the residual gas stream can be reduced down to 1%. However, this process releases about 4,000 tons of tetrachloromethane into the atmosphere every year. There it acts as a greenhouse gas and damages the ozone layer (K. A. Lokhandwala, S. Segelke, P. Nguyen, R. W. Baker, T. T. Su, I. Pinnau, Ind. Eng. Chem. Res. 1999, 38, 3606-3613).

Because of the high ozone depletion potential of carbon tetrachloride, this process was severely restricted under the Montreal Protocol. Today, only six chlor-alkali electrolysis plants worldwide still use tetrachloromethane to absorb chlorine from the residual gas stream.

Therefore, in most plants, the chlorine of the residual gas stream is not isolated; the residual gas stream is treated with sodium hydroxide, producing sodium chloride and sodium hypochlorite as waste products.

A number of membranes have been developed that have a higher permeability to chlorine, than to air, thus enabling the separation of the chlorine component from the other gases in the residual gas stream. However, most of these membranes have shown only limited stability in continuous contact with chlorine, so their industrial utility is limited (M. S. Eikeland, M.-B. Hagg, M. A. Brook, M. Ottoy, A. Lindbrathen, J. Appl. Polymer Sci. 2002, 85, 2458-2470).

In general, chlorine can be irreversibly chemically bound, e.g. by reacting chlorine with alkene-based organometallic casts, but the bound chlorine cannot be used elsewhere (T. J. Azbell, R. M. Mandel, J.-H. Lee, P. J. Milner, ACS Appl. Mater. Interfaces 2022, 14, 53982-53935).

WO2007109611A1 describes a process for the safe storage and transport of chlorine at ambient pressure. 1-Methyl-3-ethylimidazolium chloride and pyridine hydrochloride are preferred. Tetraalkylammonium and phosphonium chlorides are also mentioned. WO12130803A1 describes a process for removing halogens from mixtures of substances (CO, CO₂, N₂, methyl isocyanate, and methyl bromide). The contacting of the ionic liquid with chlorine or chlorine-containing gas takes place in a rectification column in a temperature range from ≥ 50°C to ≤ 200°C and pressures from ≥ 0.1 bar to ≤ 30 bar. The chlorine-containing ionic liquid is then fed into a separation device. There, the chlorine is (partially) released at elevated temperature and/or reduced pressure. The following compound classes are proposed: imidazolium, pyridinium, pyrrolidinium, guanidinium, phosphonium, and ammonium chlorides. Preferred compounds are trihexyltetradecylphosphonium chloride, 1-benzyl-3-methylimidazolium chloride, and 1-methyl-3-octylimidazolium chloride. Tetrabutylammonium chloride is described as an additive to improve fluidity.

WO 2019/215037 A1 describes a storage medium based on ionic compounds [NEt₃Me]Cl and [NEt₂Me₂]Cl for reversibly absorbing and storing chlorine from process gas, and which can release the chlorine gas by changing the ambient conditions. Said storage system can be reused after chlorine unloading.

When chlorine gas is added to [NEt₃Me]Cl, the corresponding trichloride [NEt₃Me][Cl₃] forms, which at room temperature is an ionic liquid:

[NEt₃Me]Cl + Cl₂ → [NEt₃Me][Cl₃]

Since trichloride [NEt₃Me][Cl₃] is an ionic liquid with a low chlorine vapour pressure, it can be handled and transported much more safely than pressurised chlorine. Furthermore, [NEt₃Me][Cl₃] can be used as a chlorination reagent that has a very similar and in some cases even superior reactivity to chlorine. For example, [NEt₃Me][Cl₃] can be reacted with carbon monoxide to produce the industrially important base chemical phosgene.

However, ionic compounds such as [NEt₃Me]Cl and [NEt₂Me₂]Cl have the disadvantage that upon chlorine uptake the compound structure changes; i.e.the ionic compounds liquify, This hampers the handling of said chlorine loaded ionic compounds.

It was therefore an object of the present invention to provide a method and a storage medium that allows for separating chlorine from a chlorine gas containing process gas using a compound that shows good storage capability for chlorine gas and can be used in an industrial scale.

This object is solved by providing a method for separating and storing chlorine gas with the features of claim 1.

Accordingly, a method for separating and storing (loading) chlorine Cl₂ from Cl₂ containing gas, in particular Cl₂ containing process gas, is provided, wherein the Cl₂ containing gas is brought into contact with
at least one polymeric compound of general formulae (I) comprising a polymer with at least one alkylated cationic quaternary amino moiety and at least one chloride anion per alkylated quaternary amino moiety

[Polymer-(NR¹ₐR²_{b}R³_{c})] [CI] (I)

Wherein R¹, R², R³ being independent from each other a C1-C4 alkyl moiety, preferably selected from the group of methyl, ethyl, n-propyl, iso-propyl, n-butyl, iso-butyl and sec-butyl,
Wherein the moieties R¹, R², R³ can be the same or different from each of the other,
Wherein a, b, c are independently from each other 0, 1, 2 or 3, wherein the sum of a+b+c has to be 3,
Wherein the chlorine Cl₂ from the Cl₂ containing gas is bound by the at least one polymeric compound of general formulae (I) thereby providing a polymeric compound of general formulae (II)

[Polymer-NR¹ₐR²_{b}R³_{c}][Cl - (Cl₂)ₙ] (II)

wherein n > 0, preferably n >=1, more preferably n being 1-4, in particular preferably n being 1,2,3,4.

Thus, a method is provided that enables not only separation of chlorine gas from a gas mixture, but also the storage of the chlorine gas in a storage medium that can be handled in an easy manner and can be used as chlorination agent, as discussed further below.

In an embodiment of the present method, the moieties R¹, R², R³ are independently from each other selected from the group of methyl, ethyl, n-propyl, iso-propyl. In a more preferred embodiment, the polymeric compound of general formulae (I) is [Polymer-NMe₃] [CI] or [Polymer-NEt₃] [Cl]

According to this method, a polymer is used to adsorb chlorine from a chlorine-containing residual gas stream. Thus, chlorine can be recovered and used in chlorination processes.. The chlorine-loaded polymer can also be used n >ophase reagent to perform chlorination reactions analogous to [NEt₃Me][Cl₃] as shown below.

The polymer compounds used in the present method are porous solids having the advantage that the structure thereof does not change upon chlorine loading; i.e. the polymer compounds are permanently solid allowing for a better gas separation at lower chlorine gas concentrations. Furthermore, a solid polymeric compound of formulae (I) can be handled easier and can be used in a variable manner (for example as solid layer, membrane, in particle form or as a block) making it more suitable to be used as absorbing material.

Specifically, the polymer compound of formulae (I) allows for a reversible absorption and storage of Cl₂ from process gas by providing Cl₂ containing polymer compound of formulae (II) that can be used as Cl₂ source for further synthetic applications.

The Cl₂ molecule(s) is bound or interacts with the alkylated cationic quaternary amino moiety and its chloride counter anion, as illustrated in scheme 1:

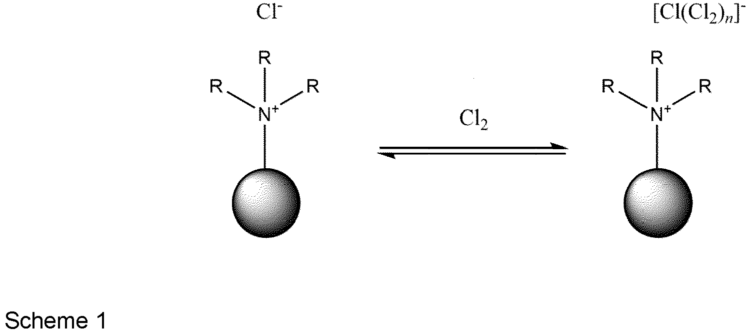

Due to the high reactivity of chlorine, many polymers have been found to degrade or decompose on contact with chlorine. Thus, only certain polymers are applicable in the present method.

Suitable polymers are based on anionic exchange resins. In an embodiment of the present method anionic-exchange resin ([resin-poly]CI) based on polystyrene or polyacrylate containing at least one alkylated cationic quaternary amino moiety are used in the present method. Such anionic-exchange resins are commercially available.

One example is polyacrylate based resin Lewatit TP107 containing alkylated quaternary amino groups and chloride anions as counter ions. This resin does not need any further conditioning and can be used without further treatment as polymer according to general formulae (I). The concentration of active sites (i.e. alkylated quaternary amino groups) is about 2.4 eq /L.

Another example is a polystyrene based resin Amberlyst with alkylated (e.g. methylated) quaternary amino groups and hydroxid ions as counter ions. As explained later in more detail, such polymers have to undergo a pre-conditioning step wherein hydroxid ions are exchanges against chloride ions to obtain the polymer according to general formulae (I). The concentration of active sites (i.e. alkylated quaternary amino groups) is about 0.8 eq /L.

A further preferred polymer suitable for the present method is a polyethylenimin (PEI) polymer containing at least one alkylated quaternary amino moiety. By using polyethyleneimine (PEI) as a base polymer, which is alkylated and cross-linked, polymers of the [PEI poly] Cl type could be synthesized. Due to the absence of functional groups, these polymeric materials not only have a high resistance to chlorine, but also a very high concentration of chloride ions, which is important to enable high chlorine absorption relative to the mass of the adsorber. Here, too, absorption of chlorine provides the corresponding trichlorides [PEI poly][Cl₃], which are stable (Scheme 2):

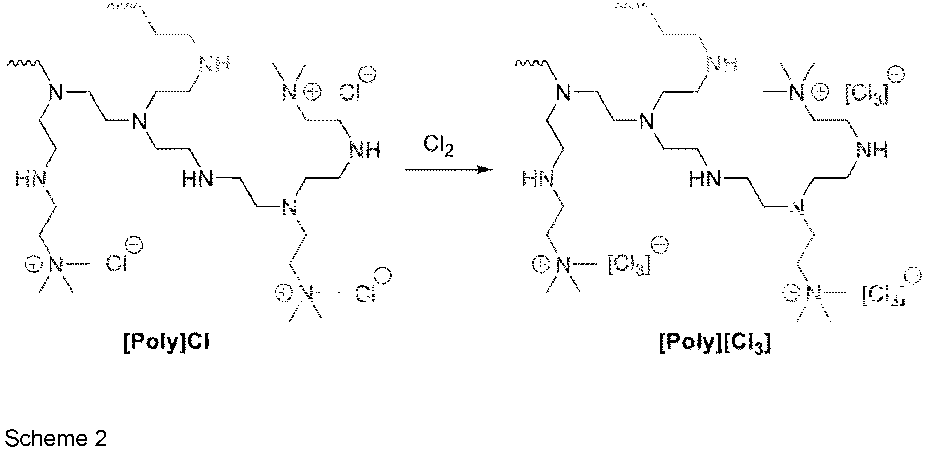

Said polyethylenimin (PEI) polymer containing at least one alkylated quaternary amino moiety can be obtained in a multistep reaction process. In one embodiment, in a first step, polyethyleneimine is reacted with a suitable crosslinking agent, such as a diisocyanate (e.g. 4,4'-Diphenylmethandiisocyanat) or glutaraldehyde to obtain a crosslinked polyethyleneimine (PEI crosslinking step).

In a second step, an alkylating agent is mixed with the crosslinked polyethyleneimine (amino alkylation or quaternization step). Suitable amino alkylation agents are dialkylsulfates (e.g. dimethylsulfate, dialkylasulfate) or methylchloroformate.

Depending on the alkylating agent used, an optional third step is required, wherein the alkylated crosslinked polyethyleneimine is conditioned with a suitable chloride anion source, such as NaCl for exchanging any anion introduced during alkylation with chloride anion, for example a sulfate anion introduced using dialkylsulfates as alkylating agent is exchanged by chloride, to obtain the modified polymer according to general formulae I. These polymers may be designated as PEI_Polymer_CI in the context of this application.

In another embodiment, the order of reaction steps is reversed. In a first step, polyethyleneimine is alkylated or modified with chlorocholine chloride (CCC) for providing PEI_CCC polymer. In a second step, the PEI_CCC polymer is crosslinked with glutaraldehyde under freezing conditions forming a cryogel PEI_Cryogel_Cl. The CCC modification can also be done in a last step after cryogelation. Both ways are possible and result in high Cl₂ adsorption.

While the ion exchange resins have the great advantage of being commercially available, the PEI-based chlorine adsorbers show higher chlorine storage capacities and can be tailored in terms of their parameters (porosity, chloride ion concentration) and shape (powder, granules, pore matrix) during synthesis.

In a further step, a preconditioning step of the polymer of formulae (I) may be required before use. For the purpose of preconditioning the polymer of formulae (I) is contacted with chlorine gas. When contacting the polymer with chlorine gas, HCl is created that also binds chloride ions. Thus, it is of an advantage to completely remove HCl from the polymer of formulae (I). for example by applying a vacuum, to obtain the preconditioned polymer of formulae (I) that is ready to be loaded with chlorine gas and used as storage medium as of formulae (II).

The polymeric compound of formulae (I) can be loaded with Cl₂ gas by condensation or in the gas phase.

Preferably, the chlorine is removed from the gas mixture by contacting the chlorine-containing process gas with the polymeric compound of formulae (I) that is placed in the process gas as solid powder.

In particular, polymeric compound of formulae (I) can be used to remove chlorine from chlorine-containing process gases, to purify the process gas of chlorine, and to make the chlorine subsequently available again for other uses. The separation task involves removing chlorine from process gases, especially those comprising H₂, CO₂, O₂, CO, NO, NO₂, N₂O₄, N₂, SO₃, and mixtures thereof.

When loading the polymeric compound of formulae (I) with Cl₂ in the gas phase, the flow rate of Cl₂ containing gas is between 10 and 40 l/h, preferably 15 and 35 l/h, more preferably 20 and 30 l/h. The Cl₂ containing gas may be a gas mixture consisting of chlorine and dry air, for example an air mixture containing 5-30 vol% Cl₂ gas, preferably 10-20 vol % Cl₂ gas, more preferably between 10 and 15 vol % Cl₂ gas. Using the gas-phase the Cl₂ uptake may be 20-90 Vol%, preferably 44-90 Vol%.

The loading of the polymeric compound of general scheme (I) with Cl₂ gas is conducted at a temperature between 10-40°C, preferably between 20-30°C and a pressure between 0.5 bar and 1.5 bar, preferably at 1 bar.

As mentioned above, the polymeric compound of formulae (I) can be also loaded with Cl₂ gas by condensation. For this purpose, the polymer is cooled to -196 °C in a pressure-resistant flask with liquid nitrogen. Then a defined amount of chlorine is added to the flask and freezes there. The flask is then heated to room temperature.

The polymeric compound of formulae (I) can be loaded with at least 0.1 g Cl₂ / g polymeric compound, preferably at least 0.2 Cl₂g / g polymeric compound, more preferably at least 0.4 g Cl₂/ g polymeric compound, even more preferably at least 0.5 g Cl₂/ g polymeric compound, still more preferably at least 0.6 g Cl₂/ g polymeric compound, and upto at least 0.8 g Cl₂/ g polymeric compound.

In an embodiment, the polymeric compound of formulae (I) can be loaded with 0.1 - 1.0 g Cl₂ / g polymeric compound, 0.2 - 0.7 Cl₂ / g polymeric compound, 0.3 - 0.6 g Cl₂ / g polymeric compound.

With these loads, different proportions of different polychloride anions may be present side by side, for example Cl₃⁻, Cl₅⁻, Cl₇⁻, and higher polychlorides.

The storage capacity of the polymer depends on the type of polymer, i.e., Resin_Poly_CI or PEI_poly_CI, and if the Cl₂ gas is added via gas phase or via condensation. For example, adding the Cl₂ gas in the gas phase seems to provide higher Cl₂ uptake.

The [resin-poly]CI of formulae (I) has a general Cl₂ loading capacity between 0.1 and 0.6 Cl₂/ g polymeric compound, wherein the polyacrylate based resin (e.g. Lewatit TP107) has loading capacity between 0.1 and 0.2 Cl₂/ g polymeric compound, whereas the polystyrene based resin (e.g. Amberlyst) has loading capacity between 0.4 and 0.6 Cl₂/ g polymeric compound.

The [PEI poly]CI of formulae (I) has a general Cl₂ loading capacity between 0.15 and 0.9 g Cl₂ / g polymeric compound, wherein the PEI_Polymer_Cl has loading capacity between 0.15 and 0.3 Cl₂/ g polymeric compound, whereas the PEI_Cryogel_CI has loading capacity between 0.6 and 0.9 Cl₂/ g polymeric compound.

In a further aspect of the present invention, the above described method provides a storage medium for storing chlorine gas Cl₂ wherein the storage medium comprises the polymeric compound of formulae (II)

[Polymer-NR¹ₐR²_{b}R³_{c}][Cl - (Cl₂)ₙ] (II)

Wherein R¹, R², R³ being independent from each other a C1-C4 alkyl moiety, preferably selected from the group of methyl, ethyl, n-propyl, iso-propyl, n-butyl, iso-butyl and sec-butyl,
Wherein the moieties R¹, R², R³ can be the same or differ from each of the other,
Wherein a, b, c are independently from each other 0, 1, 2 or 3, wherein the sum of a+b+c has to be 3,
wherein n > 0, preferably n >=1, more preferably n being 1-4, in particular preferably n being 1,2,3,4.

As mentioned, n can be >0 (i.e. any number that is larger 0). For example, if n is 0 < n < 1, then a mixture of [Polymer-NR¹ₐR²_{b}R³_{c}][Cl] and [Polymer-NR¹ₐR²_{b}R³_{c}][Cl - Cl₂] is present in the storage medium. In such a case, n could be for example 0.8 as in [Polymer-NR¹ₐR²_{b}R³_{c}][Cl - (Cl₂)_{0.8}]

The storage medium of formulae (II) contains (in the loaded state) at least 0.1 g Cl₂ / g polymeric compound, preferably at least 0.2 Cl₂ g / g polymeric compound, more preferably at least 0.4 g Cl₂/ g polymeric compound, even more preferably at least 0.5 g Cl₂/ g polymeric compound, still more preferably at least 0.6 g Cl₂/ g polymeric compound, and upto at least 0.8 g Cl₂/ g polymeric compound. The amount of absorbed Cl₂ depends on the type of polymer as described previously.

The stored chlorine can be removed from the chlorine-loaded storage medium of formulae (II), whereby the unloaded polymeric chlorine adsorbers of formulae (I) are obtained again.

Thus, in a further aspect of the invention, there is provided a method for releasing chlorine gas Cl₂ from the storage media comprising a polymeric compound of formulae (II), wherein the chlorine gas Cl₂ stored in the storage media is released by increasing the temperature of the storage media upto 80°C and/or by decreasing the partial pressure over the storage media. In this way, between 50 and 95%, preferably between 60 and 95 % of the stored chlorine gas Cl₂ are released. The cycle of storing (loading) and releasing (unloading) of chlorine gas Cl₂ can be repeated at least upto 5 times, preferably at least upto 7 times.

The unloading of the (reversible) storage medium takes place at a temperature within a range from ≥ 20°C to ≤ 80°C, preferably ≥ 30°C to ≤ 70°C, more preferably ≥ 40°C to ≤ 60°C. Cl₂ Release can optionally be initiated by reducing the partial pressure, in particular by applying a vacuum.

Thus, in yet a further aspect of the present invention, the storage medium of formulae (II) can be used for separating of Cl₂ from process gas and/or for reversible absorption and storage of Cl₂ from process gas.

However, it is also possible to use the storage medium of formulae (II) as chlorination agent, e.g. for chlorination of at least one alkene providing
- at least one chlorinated alkane and
- a polymeric compound according to the formulae (I).

Thus, the chlorine-loaded polymer storage medium of formulae (II) can be used as chlorination reagents for chlorine addition to alkenes (see scheme 3), 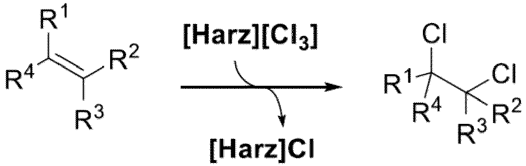 whereby the unloaded chlorine polymeric adsorbing compounds of formulae (I) are recovered.

Overall, the polymer-based chlorine adsorbers of formulae (I) offer great potential for the safe and simple adsorption, storage and conversion of chlorine from residual gas streams. In the future, chlorine production could thus become more efficient, environmentally friendly and resource-saving.

The invention is now explained in more detail by means of examples with reference to the figures. It shows:
- **Figure 1**: Raman Spectra of Amberlyst A26 (CI), before and after loading with chlorine. Bands highlighted in yellow show the precence of [Cl*ₙ*]⁻ anion for the loaded storage.
- **Figure 2**: Raman Spectra of cPEI_Cl Polymers before and after loading with chlorine. Bands highlighted in yellow show the presence of [Cl*ₙ*]⁻ anion for the loaded storage.
- **Figure 3**: Raman Spectra of Cryogel_Cl Polymer before and after loading with chlorine. Bands highlighted in yellow show the presence of [Cl*ₙ*]⁻ anion for the loaded storage.
- **Figure 4**: ¹H-NMR (400 MHz, CDCl₃, 20 °C) of the reaction mixture after chlorination of ethene with the loaded storage material.
- **Figure 5**: ¹³C-NMR (100 MHz, CDCl₃, 20 °C) of the reaction mixture after chlorination of ethene with the loaded storage material.
- **Figure 6**: Uptake of the chlorine from a residual gas stream by Amberlyst A26 (CI) as a function of time.
- **Figure 7**: Setup for chlorine absorption from a residual gas stream.
- **Figure 8**: Relative UV/Vis absorbance of the gas mixture as a function of time. Decreasing absorbance indicate a decrease of chlorine concentration.
- **Figure 9**: SEM image of cPEI-MDI-DMS-2CI.
- **Figure 10**: SEM image of cPEI-MDI-DES-2CI.
- **Figure 11**: SEM image of the chloro formate methylated cPEI-MDI.
- **Figure 12**: SEM image of the protonated cPEI-MDI using HCl.
- **Figure 13**: SEM image of PEI_Cryogel_CI with 30x magnification.
- **Figure 14**: SEM image of PEI_Cryogel_CI with 150x magnification.
- **Figure 15**: IR spectra of commercial PEI
- **Figure 16**: IR spectra of PEI-CCC
- **Figure 17**: ¹H-NMR of commercial PEI (left) and PEI-CCC (right) in D₂O.
- **Figure 18**: ¹³C-NMR of commercial PEI (left) and PEI-CCC (right) in D₂O.
- **Figure 19**: TGA curves of the PEI_cryogel_CI.

### Polymers for Chlorine Storage:

Commercially available anion exchange resins Lewatit TP107, Amberlyst A26 (CI) and synthesizsed PEI based polymers PEI_Polymer_Cl (cPEI_Cl), PEI_Cryogel_CI (Cryogel_CI) (see synthesis protocols below) were used.

The polymer material (Lewatit TP107, Amberlyst A26 (CI), PEI_Polymer_Cl (cPEI_Cl), PEI_Cryogel_CI (Cryogel_CI)) was dried and subsequently chlorine gas was slowly added for preconditioning the polymer. Overnight, the chlorine was removed under high vacuum to obtain the preconditioned chlorine storage medium.

Storage of chlorine is achieved by adding chlorine either by condensation or via the gas phase to the preconditioned polymers.

By applying a vacuum and heating to 60 °C for 5 h between 60% (PEI_Cryogel) and 95% (Amberlist A26 (Cl)) of the stored chlorine is released. The storage could be loaded and unloaded more than 7 times without significant decrease of the storage and release quantity for chlorine being detected.

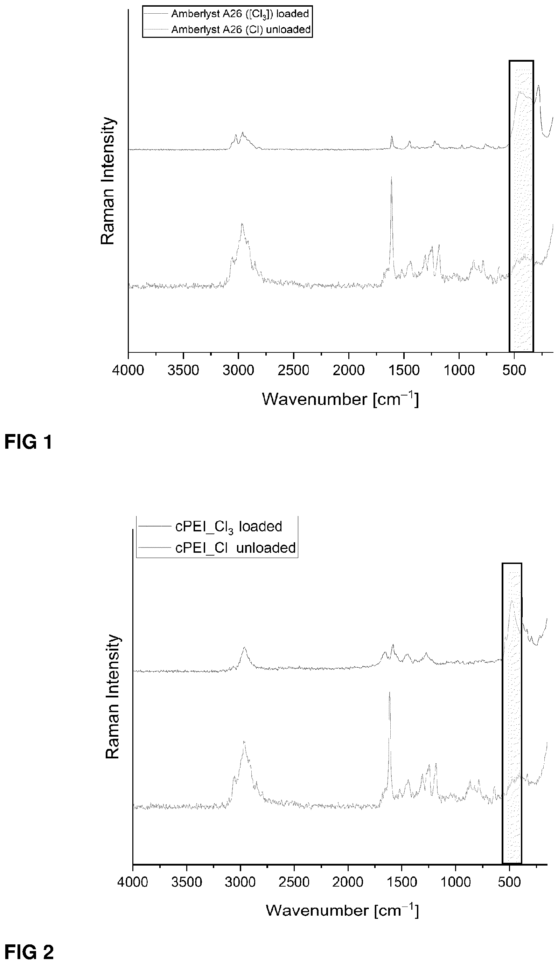

The determined storage capacities of the different polymers are given in table 1. The polymer materials were characterized by Raman Spectroscopy (Figure 1-3) indicating the formation of polychloride anions ([Cl(Cl₂)*ₙ*]⁻; *n* = 1-4) during loading of the storage material.

**Table 1. Storage capacities of the polymers in g chlorine per g chlorine storage medium.**

| Loading Method | Lewatit TP107 | Amberlyst A26 (CI) | PEI_Polymer | PEI-_Cryogel |
|---|---|---|---|---|
| Gas phase | 0.119 | 0.593 | 0.272 | 0.833 |
| Condensed | 0.160 | 0.447 | 0.154 | 0.625 |

### Chlorination of Ethene with Amberlyst A26 ([Cl₃]):

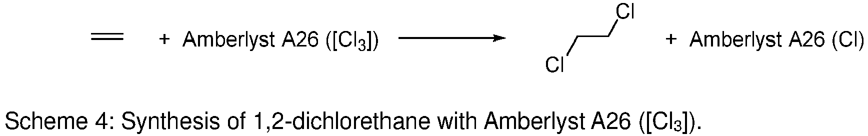

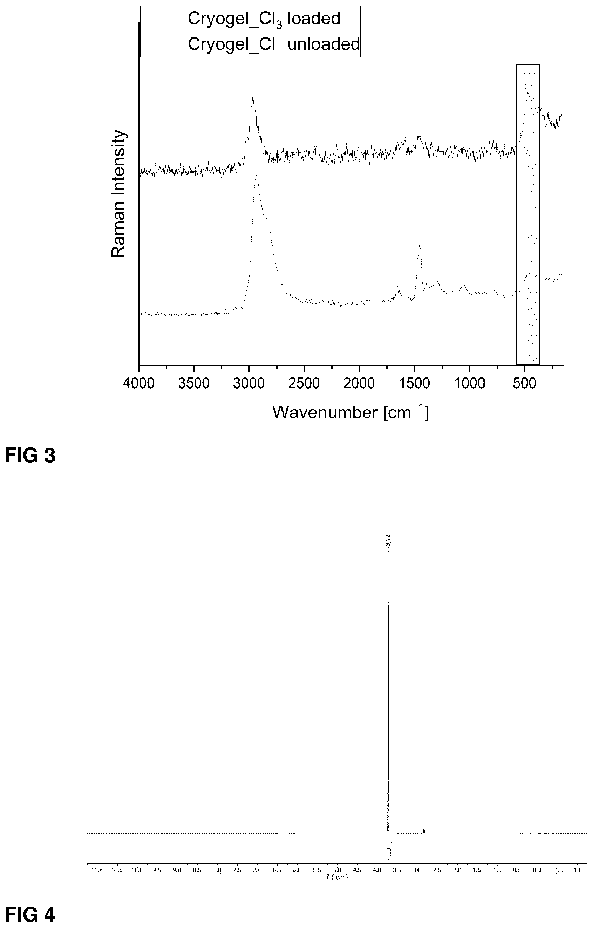

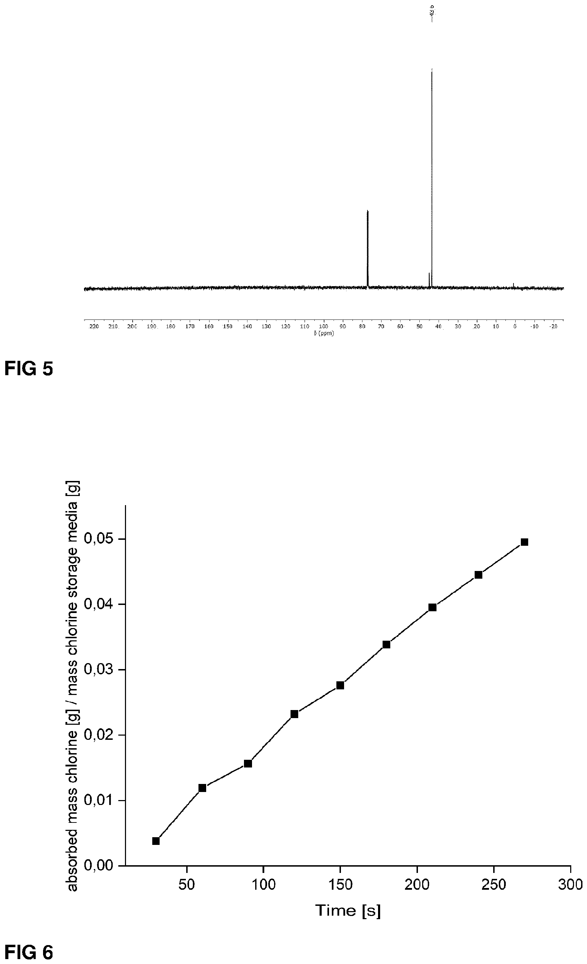

The loaded storage medium (Amberlyst A26 ([Cl₃]; 13.2 mmol, 0.940 g stored chlorine) was added to a flask. Subsequently, an excess of ethylene was added. Decolorized of the resin was observed and a liquid formed inside the flask. The obtained liquid was characterized by ¹H and ¹³C-NMR spectroscopy (See Figure 4 and 5) reveling the presence of 1,2-dichlorethan as the only product.
¹H-NMR (400 MHz, CDCl₃): δ = 3.72 (s, 4H) ppm.
¹³C-NMR (100 MHz, CDCl₃): δ = 43.6 ppm.

### Separation of Chlorine from a Chlorine/Air mixture

A gas mixture consisting of 12.5% chlorine and 87.5% dry air was passed through a PFA (Perfluoroalkoxy alkane) U-tube filled with Amberlyst A26 (CI) (15.95 g) with a flow rate of 25 Uh (corresponding to 0.83 g/min). Using a balance, the chlorine uptake by the Amberlyst could be observed (Figure 6). In total 20% of the chlorine passed through the system was absorbed.

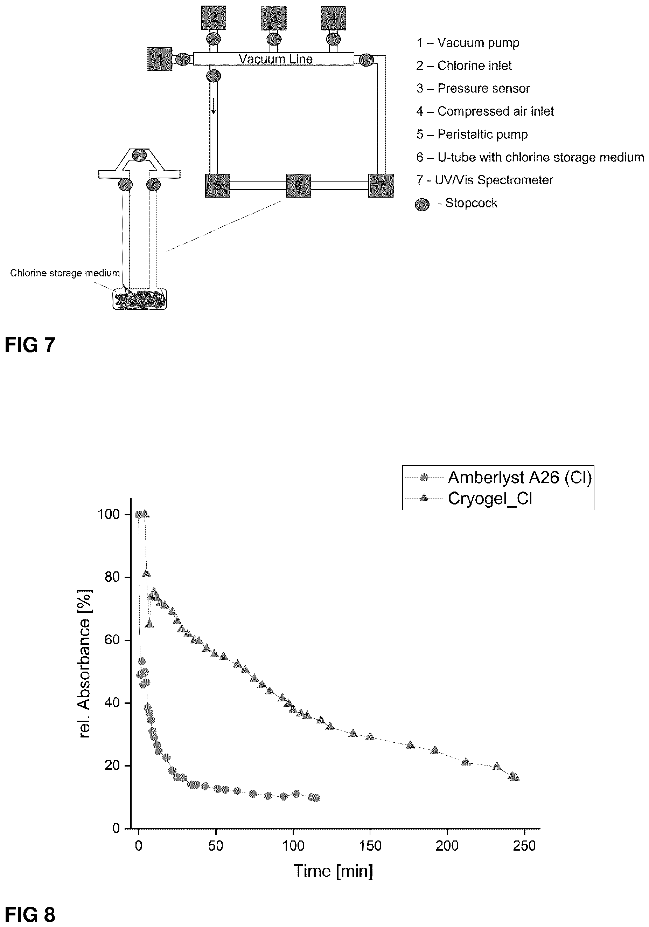

A gas mixture consisting of 15% chlorine and 85% dry air was circulated passing a U-tube filled with the chlorine storage material using a peristaltic pump (Figure 7). The chlorine content of the system was monitored using UV/Vis spectroscopy and by weighing the storage material after the experiment. Circulating the gas mixture for 115 to 250 min resulted in the absorption of 44% to 90% of the chlorine present in the system (Figure 8).

### Synthesis of PEI Polymer CI

### 1.1 PEI Crosslinking

### 1.1.1 4,4'-Diphenylmethandiisocyanat (MDI)

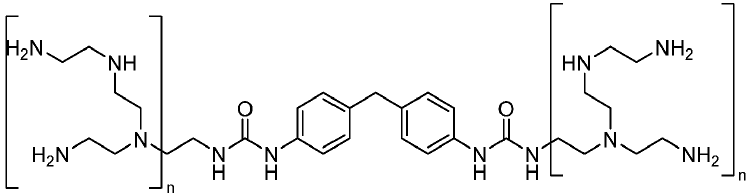

### cPEI-MDI-2

bPEI (10 g, branched polyethylenimine, MW 10,000, catalogue nr.: 19850, 10 g) was dissolved in dichloromethane (DCM) (75 mL) under continuous stirring. MDI (2 mol%) was dissolved in DCM (4 mL) and added to the reaction mixture over a time of 4 h. The reaction mixture was stirred overnight and quenched with H₂O (10 mL). The product was washed with MeOH (200 mL) and H₂O (200 mL) in the centrifuge. The product, a white powder (1.9 g) was obtained after lyophilization.

### cPEI-MDI-10 (scale up)

bPEI (50 g) was dissolved in DCM (500 mL) under continuous stirring. MDI (10 mol%) was dissolved in DCM (150 mL) and added to the reaction mixture over a time of 3 h. The reaction mixture was stirred overnight and quenched with H2O (200 mL). The product was washed with MeOH (500 mL) and H₂O (500 mL) in the centrifuge. The product was dried under lyophilization overnight. The product, a white powder, was obtained after lyophilization.
EA[%] C 62.2, N 17.9, H 7.2
Cl⁻ [mol kg⁻¹]: 0.25

### 1.1.2 Glutaraldehyde

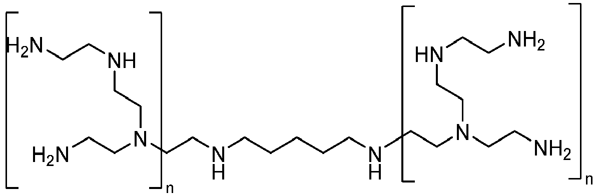

### cPEI-Glut-10

PEI (1 g) was dissolved in H₂O (10 mL) under continuous stirring. Glutaraldehyde (10 mol%, 50% solution in water) was added to the reaction mixture. The reaction was carried out overnight at rt. Formic acid (5 mL) was added, the solution was heated up to 70°C and stirred overnight. The product was washed with H₂O (200 mL) in the centrifuge and dried under lyophilization overnight to obtain an orange sponge-like powder (0.67 g).
EA[%] C 52.2, N 15.8, H 11.3
Cl⁻ [mol kg⁻¹]: 0

### cPEI-Glut-20

PEI (1 g) was dissolved in H₂O (10 mL) under continuous stirring. Glutaraldehyde (20 mol%, 50% solution in water) was added to the reaction mixture. The reaction was carried out overnight at rt. Formic acid (5 mL) was added, the solution was heated up to 70°C and stirred overnight. The product was washed with H₂O (200 mL) in the centrifuge and dried under lyophilization overnight to obtain an orange sponge-like powder (1.22 g).
EA[%] C 26.3, N 10.6, H 7.2
Cl⁻ [mol kg⁻¹]: 0

### 1.2 Quaternization

### 1.2.1 Dialkyl Sulfates

### cPEI-MDI-DMS-1Cl/

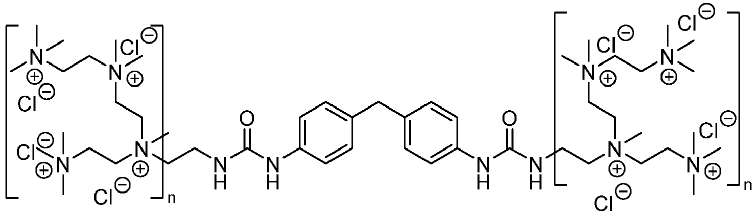

cPEI-MDI-10 (5 g) was mixed with dimethyl sulfate (DMS) or diethyl sulfate (DES) (20 eq, based on PEl-monomer) and K₂CO₃ (0.5 eq). The reaction was carried out at rt for 3 days. The alkyl sulfate was neutralized with a NH3-solution (25%) under ice cooling. The product was washed with H₂O (200 mL) and stirred overnight in a saturated NaCl solution (400 mL). Afterwards the product was washed again with H₂O (200 mL) and dried under lyophilization overnight to obtain a white powder.
EA[%] C 49.3, N 13.7, H 7.0
Cl⁻ [mol kg⁻¹]: 3.2

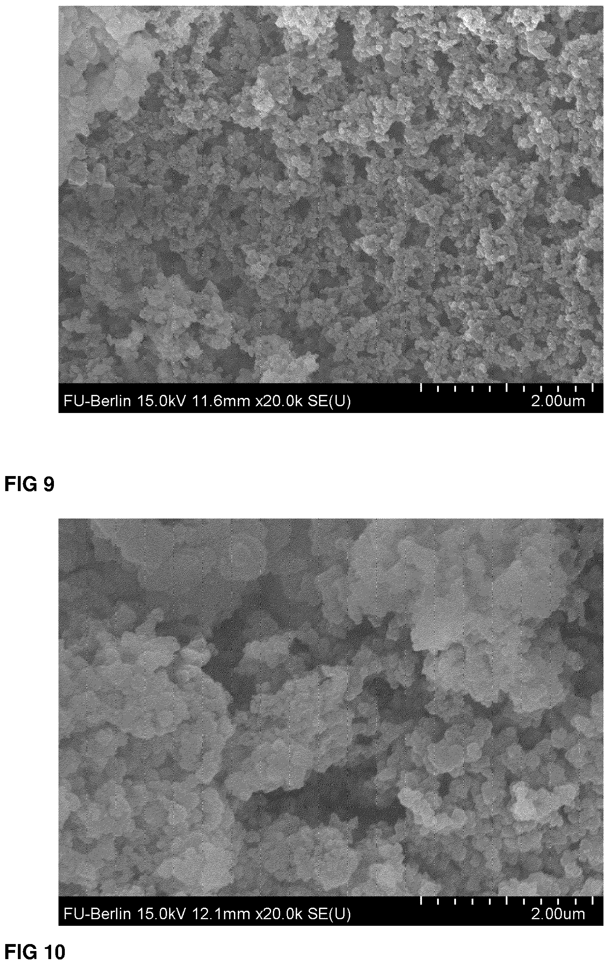

### cPEI-MDI-DMS-2Cl (Fig. 9)

The procedure for cPEI-MDI-DMS-1Cl was repeated.
EA[%] C 50.5, N 14.1, H 7.1
Cl⁻ [mol kg⁻¹]: 1.4

### cPEI-MDI-DES-1 CI

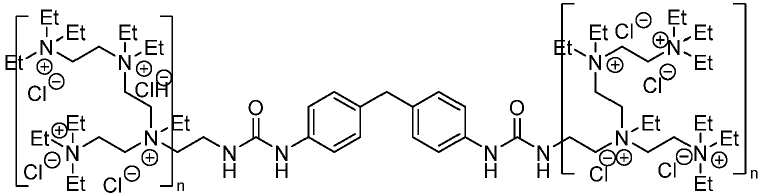

The described procedure for cPEI-MDI-DMS-1Cl was performed with diethyl sulfate (20 eq, based on PEI-monomer) instead of dimethyl sulfate.
EA[%] C 45.8, N 12.8, H 6.5
Cl⁻ [mol kg⁻¹]: 2.7

### cPEI-MDI-DES-2Cl (Fig. 10)

The procedure for cPEI-MDI-DES-1Cl was repeated.
EA[%] C 55.4, N 14.5, H 7.5
Cl⁻ [mol kg⁻¹]: 2.2

### 1.2.2 Methyl Chloroformate

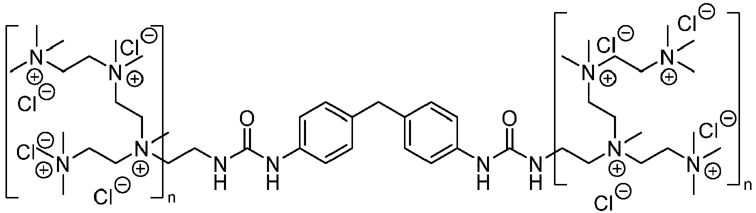

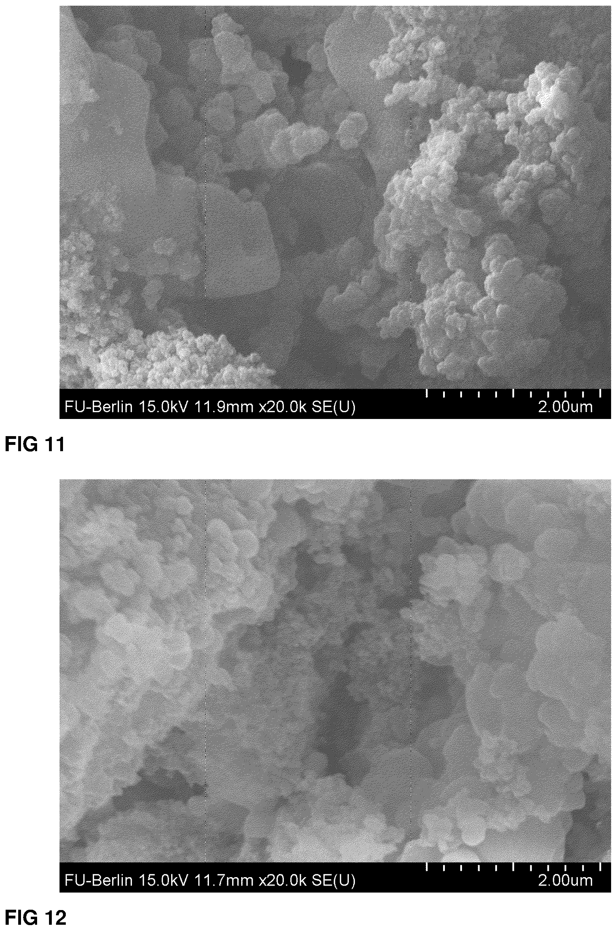

To a slurry of cPEI-MDI-10 (5 g) and DCM (50 mL), methyl chloroformate (4 eq) in DCM (10 mL) was added dropwise at -15 °C. The reaction was allowed to warm up and stirred overnight. Afterwards the reaction was heated up for 3 h. The product was dried under reduced pressure to obtain a white powder (Fig. 11).
EA[%] C 50.8, N 17.9, H 6.6
Cl⁻ [mol kg⁻¹]: 2.9

### 1.2.3 Hydrochloric Acid

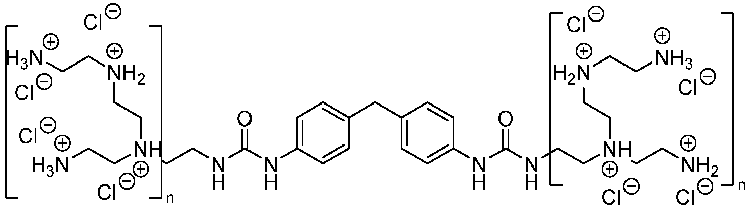

cPEI-MDI-10 (5 g) was mixed with HCl (1M, 460 mL, 4.0 eq based on PEI-monomer) and stirred at rt overnight. The product was washed with H₂O (200 mL) and dried under lyophilization overnight to obtain a white powder (Fig. 12).
EA[%] C 52.3, N 18.3, H 6.9
Cl⁻ [mol kg⁻¹]: 3.9

### Synthesis of PEI Cryogel Cl

### 1.3 Synthetic Strategy

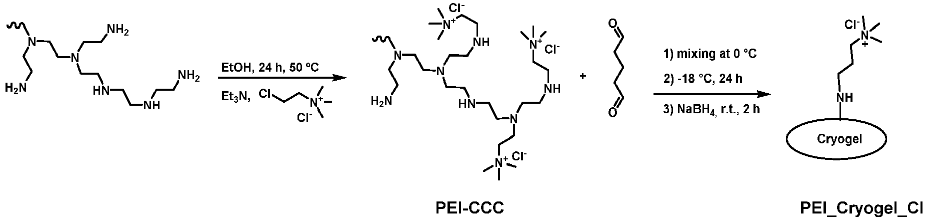

### Scheme 1. General synthetic route for the synthesis of PEI-CCC polymer and PEI_Cryogel_CI (Cryogel_Cl))

The synthetic strategy for cryogels fabrication consists of two main synthetic steps. Firstly, PEI is modified with chlorocholine chloride (CCC) by heating at 50 ºC for 24 h in ethanol. An equimolar amount of triethylamine was used to neutralize the HCl generated during the reaction.

After obtaining the PEI derivative (PEI-CCC), the synthesis of the cryogels was performed as described in the experimental section.

### 1.4 Synthesis of PEI-CCC

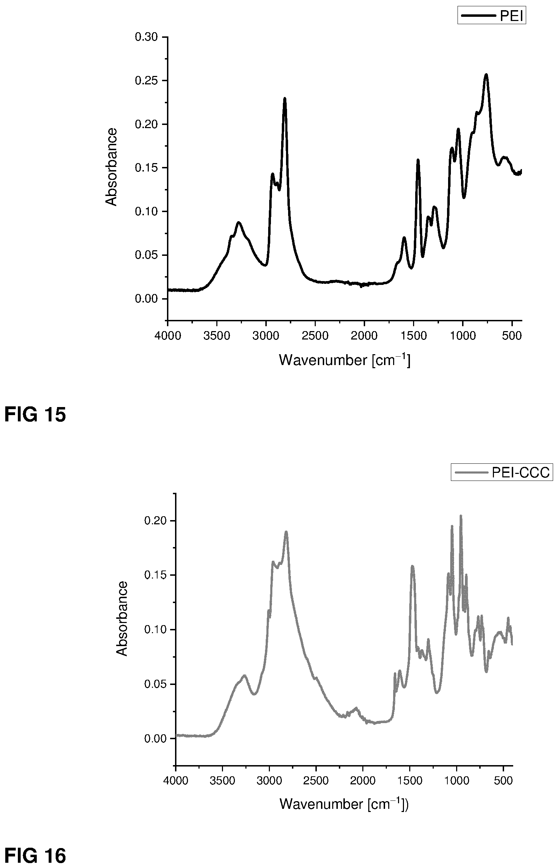

PEI (15.0 g, 0.348 mmol) is dissolved in ethanol (350 mL). Chlorocholine chloride (72.6 g, 0.459 mmol) and triethylamine (46.5 g, 0.459 mmol) are added to the solution. The mixture is heated to 60 ºC and kept at this temperature for 16 hours. The mixture is then cooled to room temperature, before removing the solvent with rotatory evaporation. The crude is dissolved in water (500 mL) and purified using tangential flow filtration. The pure polymer was dried by lyophilization obtaining 26.69 g of the final product as a brown solid (Fig. 16).

### 1.5 Cryogel Synthesis

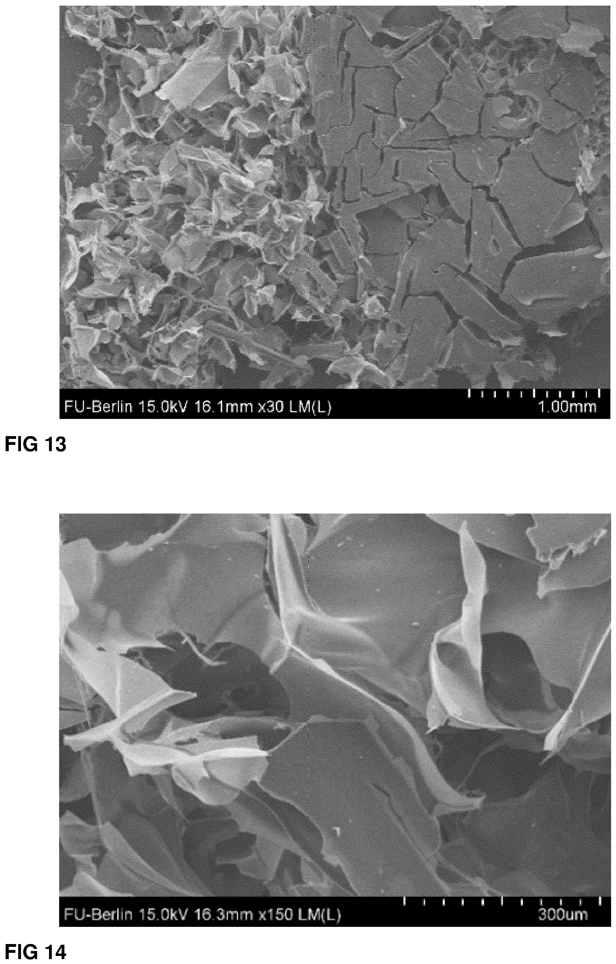

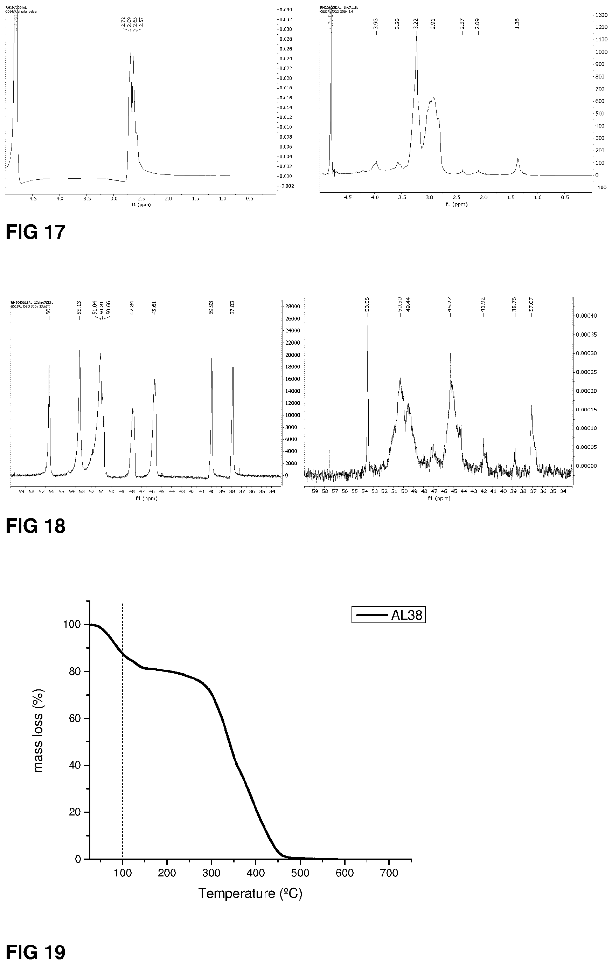

A solution of PEI-CCC (2 wt%, (m/v)) and glutaraldehyde ( 2.5 wt% (m/v)) were prepared. Both solutions were previously cooled to 0-1 ºC to prevent crosslinking before freezing. Afterwards, PEI-CCC solution (4 g, 200 mL) and glutaraldehyde solution (1.36 g, 54.5 mL) were mixed and stirred vigorously at this temperature until homogenization of the mixture. The resulting solution was poured into aluminium pans (size: 64 mm diameter, 28 mL volume), and introduced into a freezer at a temperature of -18 ºC. The mixture is kept at this temperature for 24 hours. Subsequently, the formed discs are thawed to room temperature and remaining solution is decantated. A solution of NaBH₄ (2 g of NaBH₄, 2.1 g of NaHCOs and 0.41 g of NaOH in 1 L of H₂O), used to reduce the formed imines to the corresponding amines, is added to the cryogels. The solution is then changed 3 times in the time period of 2 hours. Afterwards, the cryogels are washed with deionized water until pH 7. Finally, the cryogels are frozen and dried using lyophilization (Fig. 13, 14, 19).

### Elemental Analysis

CHN elemental analysis was measured in duplicates using an Elementar Vario EL machine.

### Chloride quantification by mercurimetric titration

The concentration of chloride ions in the adsorber materials was quantified using a MQuant Chloride Test kit 1.11106.0001 from Supelco (Merck KGaA). The titration was performed according to the procedure of the test kit. (10.0 ± 0.3) mg of the respective adsorber were diluted with MilliQ water (5.00 mL). After the addition of two drops of a *N*,*N*'-dimethyl acetamide-containing solution of the indicator 1 ,5-diphenyl carbazone the solution turned blue. Afterwards, the aqueous mixture with the adsorber material was acidified using nitric acid solution till the colour became yellow. The yellow mixture was titrated with mercury (II) nitrate solution. The equivalence point is indicated by a colour change from yellow to violet.

### Scanning electron microscopy

Scanning electron microscopy was performed on a SU8030 from Hitachi. The samples were adhered to a copper band and sputtered with gold (5 nm) using a compact coating unit CCU-010 from safematic. An acceleration voltage of 15 mV and current of 10 µA was used for the electron beam. The beam, apparatus and X and Y were aligned to minimize the movement of the image. Images of 1280 x 960 size were recorded.

## Claims

1. Method for separating and storing (loading) chlorine Cl₂ from Cl₂ containing gas, in particular CI₂ containing process gas, by contacting the Cl₂ containing gas with
at least one polymeric compound of general formulae (I) comprising a polymer with at least one alkylated cationic quaternary amino moiety and at least one chloride anion per alkylated quaternary amino moiety
[Polymer-(NR¹ₐR²_{b}R³_{c})] [Cl] (I)
Wherein R¹, R², R³ being independent from each other a C1-C4 alkyl moiety, preferably selected from the group of methyl, ethyl, n-propyl, iso-propyl, n-butyl, iso-butyl and sec-butyl,
Wherein the moieties R¹, R², R³ can be the same or differ from each of the other,
Wherein a, b, c are independently from each other 0, 1, 2 or 3, wherein the sum of a+b+c has to be 3,
Wherein the chlorine Cl₂ from Cl₂ containing gas is bound by the at least one polymeric compound of general formulae (I) thereby providing a polymeric compound of general formulae (II)
[Polymer-NR¹ₐR²_{b}R³_{c}][Cl - (Cl₂)ₙ] (II)
wherein n > 0, preferably n >=1, more preferably n being 1-4.

2. Method according to claim 1, **characterized in that** the polymer is an anionic-exchange resin, in particular a polystyrene or polyacrylate, containing at least one alkylated cationic quaternary amino moiety.

3. Method according to claim 1, **characterized in that** the polymer is a polyethylenimin (PEI) polymer containing at least one alkylated quaternary amino moiety.

4. Method according to one of the preceding claims, **characterized in that** R¹, R², R³ being independent from each other selected from the group of methyl, ethyl, n-propyl, iso-propyl,

5. Method according to one of the preceding claims, **characterized in that** the polymeric compound of general scheme (I) is [Polymer-NMes] [CI] or [Polymer-NEts] [CI]

6. Method according to one of the preceding claims, **characterized in that** the polymeric compound of general scheme (I) is loaded with Cl₂ gas by condensation or in the gas phase.

7. Method according to one of the preceding claims, **characterized in that** the loading of the polymeric compound of general scheme (I) with Cl₂ gas is conducted at a temperature between 10-40°C, preferably between 20-30°C and a pressure between 0.5 bar and 1.5 bar, preferably at 1 bar.

8. Method according to one of the preceding claims, **characterized in that** the polymeric compound of general scheme (I) is loaded with at least 0.1 g Cl₂ / g polymeric compound, preferably at least 0.2 Cl₂ g / g polymeric compound, more preferably at least 0.4 g Cl₂ / g polymeric compound, even more preferably at least 0.5 g Cl₂/ g polymeric compound, still more preferably at least 0.6 g Cl₂ / g polymeric compound, and upto at least 0.8 g Cl₂/ g polymeric compound.

9. Storage medium for storing chlorine gas Cl₂ obtainable by a method according to one of the preceding claims, wherein the storage medium comprises a polymeric compound of general formulae (II)
[Polymer-NR¹ₐR²_{b}R³_{c}][Cl - (Cl₂)ₙ] (II)
Wherein R¹, R², R³ being independent from each other a C1-C4 alkyl moiety, preferably selected from the group of methyl, ethyl, n-propyl, iso-propyl, n-butyl, iso-butyl and sec-butyl,
Wherein the moieties R¹, R², R³ can be the same or differ from each of the other,
Wherein a, b, c are independently from each other 0, 1, 2 or 3, wherein the sum of a+b+c has to be 3,
Wherein n>0, preferably n >=1, more preferably n being 1-4.

10. Storage medium according to claim 9, **characterized in that** the polymeric compound of general formulae (II) contains (in the loaded state) at least 0.1 g Cl₂ / g polymeric compound, preferably at least 0.2 Cl₂ g / g polymeric compound, more preferably at least 0.4 g Cl₂ / g polymeric compound, even more preferably at least 0.5 g Cl₂ / g polymeric compound, still more preferably at least 0.6 g Cl₂ / g polymeric compound, and upto at least 0.8 g Cl₂/ g polymeric compound.

11. Use of a storage medium according to one of the preceding claims 9-10 for separating of Cl₂ from process gas and/or for reversible absorption and storage of Cl₂ from process gas.

12. Use of the storage medium according to one of the claims 9-10 for chlorination of at least one alkene providing at least one chlorinated alkane and a polymeric compound according to the formulae (I) as defined in claims 1.

13. Method for releasing chlorine gas Cl₂ from the storage media comprising a polymeric compound of general scheme (II) according to one of the claims 9-10, **characterized in that**
- the chlorine gas Cl₂ stored in the storage media is released by increasing the temperature of the storage media upto 60°C and/or by decreasing the partial pressure over the storage media by applying a vacuum.

14. Method according to claim 13, **characterized in that** between 50 and 95%, preferably between 60 and 95 % of the stored chlorine gas Cl2 is released.

15. Method according to one of the claims 1-8 and 13-14, **characterized in that** the cycle of storing (loading) chlorine gas Cl₂ in a polymeric compound of formulae (I) and providing a storage medium comprising a polymeric compound of formulae (II) and releasing (unloading) of chlorine gas Cl₂ from said storage medium can be repeated at least upto 5 times, preferably at least upto 7 times.
